(19) Europäisches Patentamt / European Patent Office / Office européen des brevets

(11) **EP 3 565 299 A1**

(12) **EUROPEAN PATENT APPLICATION**
published in accordance with Art. 153(4) EPC

(43) Date of publication:
06.11.2019 Bulletin 2019/45

(51) Int Cl.:
*H04W 24/02* (2009.01)  *H04W 24/10* (2009.01)

(21) Application number: 17887577.9

(22) Date of filing: 07.12.2017

(86) International application number:
PCT/CN2017/114923

(87) International publication number:
WO 2018/121203 (05.07.2018 Gazette 2018/27)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD TN

(30) Priority: 28.12.2016 CN 201611236471

(71) Applicant: Vivo Mobile Communication Co., Ltd.
Dongguan, Guangdong 523860 (CN)

(72) Inventors:
• JIANG, Lei
  Dongguan
  Guangdong 523860 (CN)
• YUE, Ran
  Dongguan
  Guangdong 523860 (CN)

(74) Representative: Conti, Marco
Bugnion S.p.A.
Via di Corticella, 87
40128 Bologna (IT)

(54) **MEASUREMENT CONFIGURATION METHOD, NETWORK EQUIPMENT, AND TERMINAL EQUIPMENT**

(57) A measurement configuration method, a network device and a terminal device are provided. The measurement configuration method includes: transmitting measurement configurations corresponding to different Numerologies to a terminal device; and receiving measurement report information reported by the terminal device in accordance with the measurement configuration, the measurement report information including a RRM measurement result corresponding to each Numerology. The measurement configuration includes Numerology information, and the Numerology information includes at least one of a frequency-domain resource bandwidth, a subcarrier spacing and a cyclic prefix of a Numerology configuration.

transmitting measurement configurations with respect to different Numerologies to a terminal device — 101

receiving measurement report information reported by the terminal device in accordance with the measurement configuration, wherein the measurement report information includes a RRM measurement result corresponding to the Numerology — 102

**Fig.1**

EP 3 565 299 A1

# Description

## CROSS-REFERENCE TO RELATED APPLICATION

The present application claims a priority of the Chinese patent application No.201611236471.8 filed in China on December 28, 2016, a disclosure of which is incorporated herein by reference in its entirety.

## TECHNICAL FIELD

The present disclosure relates to the field of communication technology, in particular to a measurement configuration method, a network device and a terminal device.

## BACKGROUND

As compared with a conventional mobile communication system, a future 5th-Generation (5G) mobile communication system needs to be adapted to various scenarios and service requirements. Principal scenarios for the 5G mobile communication system include enhanced Mobile Broad Band (eMBB), massive Machine Type of Communication (mMTC), and ultra-Reliable and Low Latency Communications (uRLLC). High reliability, low latency, broad bandwidth and wide coverage are highly demanded for the system in these scenarios. In order to meet the requirements on various services and various scenarios, different from a Long Term Evolution (LTE) system where a single subcarrier spacing of 15kHz is adopted, the 5G mobile communication system may support various subcarrier spacings for different scenarios. For example, a relatively large subcarrier spacing may be configured for a scenario with a high frequency band and a broad bandwidth. In addition, the large subcarrier spacing corresponds to a small symbol length in a time domain, so it is able to meet the requirement of a low latency service.

For the 5G mobile communication system, the subcarrier spacing may be $2^n*15kHz$. Different subcarrier spacings may exist on a same carrier, i.e., different carrier Numerologies may be reused. Each Numerology may be adopted for a corresponding service or scenario.

In the LTE system, an evolved Node B (eNB) may perform measurement configuration on a User Equipment (UE) through a Radio Resource Control (RRC) connection reconfiguration message. The UE may estimate channels for a current cell and a neighboring cell in accordance with measurement configuration, and report a measurement result. The UE may perform the measurement on a measurement bandwidth in accordance with a configured frequency, and report the measurement result in accordance with a trigger type. New Radio (NR) system may support various Numerologies and different Numerologies may be reused, so there is no scheme for performing Radio Resource Management (RRM) measurement with respect to the various Numerologies in related art.

## SUMMARY

An object of the present disclosure is to provide a measurement configuration method, a network device and a terminal device, so as to solve the problem in the related art where it is impossible to perform the RRM measurement in a scenario where various Numerologies are reused.

In one aspect, the present disclosure provides in some embodiments a measurement configuration method, including: transmitting measurement configurations with respect to different Numerologies to a terminal device, wherein the measurement configuration includes Numerology information, and the Numerology information includes at least one of a frequency-domain resource bandwidth, a subcarrier spacing and a cyclic prefix of a Numerology configuration; and receiving measurement report information reported by the terminal device in accordance with the measurement configuration, wherein the measurement report information includes a RRM measurement result corresponding to the Numerology.

In another aspect, the present disclosure provides in some embodiments measurement configuration method including: receiving measurement configurations with respect to different Numerologies transmitted from a network device, wherein the measurement configuration includes Numerology information, and the Numerology information includes at least one of a frequency-domain resource bandwidth, a subcarrier spacing and a cyclic prefix of a Numerology configuration; performing RRM measurement in a to-be-measured cell with respect to each of the different Numerologies in accordance with the Numerology information in the measurement configuration, to acquire a RRM measurement result; and transmitting measurement report information carrying the RRM measurement result to the network device.

In yet another aspect, the present disclosure provides in some embodiments a network device, including: a first transmission module configured to transmit measurement configurations with respect to different Numerologies to a terminal device, wherein the measurement configuration includes Numerology information, and the Numerology information includes at least one of a frequency-domain resource bandwidth, a subcarrier spacing and a cyclic prefix of a Numerology configuration; and a first reception module configured to receive measurement report information reported by the terminal device in accordance with the measurement configuration, wherein the measurement report information includes a RRM measurement result corresponding to the Numerology.

In still yet another aspect, the present disclosure provides in some embodiments a terminal device, including: a second reception module configured to receive measurement configurations with respect to different Numerologies transmitted from a network device, wherein the measurement configuration includes Numerology information, and the Numerology information includes at least one of a frequency-domain resource bandwidth, a subcarrier spacing and a cyclic prefix of a Numerology configuration; a measurement module configured to perform RRM measurement in a to-be-measured cell with respect to each of the different Numerologies in accordance with the Numerology information in the measurement configuration, to acquire a RRM measurement result; and a second transmission module configured to transmit measurement report information carrying the RRM measurement result to the network device.

In still yet another aspect, the present disclosure provides in some embodiments a network device, including a memory, a processor, and a computer program stored in the memory and executed by the processor. The processor is configured to execute the computer program, so as to implement the above-mentioned measurement configuration method.

In still yet another aspect, the present disclosure provides in some embodiments a terminal device, including a memory, a processor, and a computer program stored in the memory and executed by the processor. The processor is configured to execute the computer program, so as to implement the above-mentioned measurement configuration method.

In still yet another aspect, the present disclosure provides in some embodiments a computer-readable storage medium storing therein a computer program. The computer program is executed by a processor, so as to implement steps of the above-mentioned measurement configuration method.

In still yet another aspect, the present disclosure provides in some embodiments a computer-readable storage medium storing therein a computer program. The computer program is executed by a processor, so as to implement steps of the above-mentioned measurement configuration method.

The advantages of the present disclosure are as follows. The network device may configure the measurement configurations with respect to different Numerologies for the terminal device, so as to control the terminal device to perform the RRM measurement on the to-be-measured cell with respect to each Numerology in accordance with the measurement configuration, and report the measurement report information when the RRM measurement result meets a predetermined condition. As a result, it is able to perform the RRM measurement for a system where different Numerologies are reused.

## BRIEF DESCRIPTION OF THE DRAWINGS

In order to illustrate the technical solutions of the present disclosure in a clearer manner, the drawings desired for the present disclosure will be described hereinafter briefly. Obviously, the following drawings merely relate to some embodiments of the present disclosure, and based on these drawings, a person skilled in the art may obtain the other drawings without any creative effort.

Fig.1 is a flow chart of a measurement configuration method according to some embodiments of the present disclosure;
Fig.2 is a flow chart of another measurement configuration method according to some embodiments of the present disclosure;
Fig.3 is a schematic view showing radio resources with respect to Numerologies which are reused in a time-division manner according to some embodiments of the present disclosure;
Fig.4 is a schematic view showing radio resources with respect to Numerologies which are reused in a frequency-division manner according to some embodiments of the present disclosure;
Fig.5 is a schematic view showing a network device according to some embodiments of the present disclosure;
Fig.6 is another schematic view showing the network device in Fig.5;
Fig.7 is a schematic view showing another network device according to some embodiments of the present disclosure;
Fig.8 is a flow chart of yet another measurement configuration method according to some embodiments of the present disclosure;
Fig.9 is a schematic view showing a terminal device according to some embodiments of the present disclosure;
Fig.10 is another schematic view showing the terminal device in Fig.9;
Fig.11 is a block diagram showing another terminal device according to some embodiments of the present disclosure; and
Fig.12 is a schematic view showing yet another terminal device according to some embodiments of the present disclosure.

## DETAILED DESCRIPTION OF THE EMBODIMENTS

The present disclosure will be described hereinafter in conjunction with the drawings and embodiments. The following embodiments are for illustrative purposes only, but shall not be used to limit the scope of the present disclosure. Actually, the embodiments are provided so as to facilitate the understanding of the scope of the present disclosure and completely convey the scope of the present disclosure to a person skilled in the art.

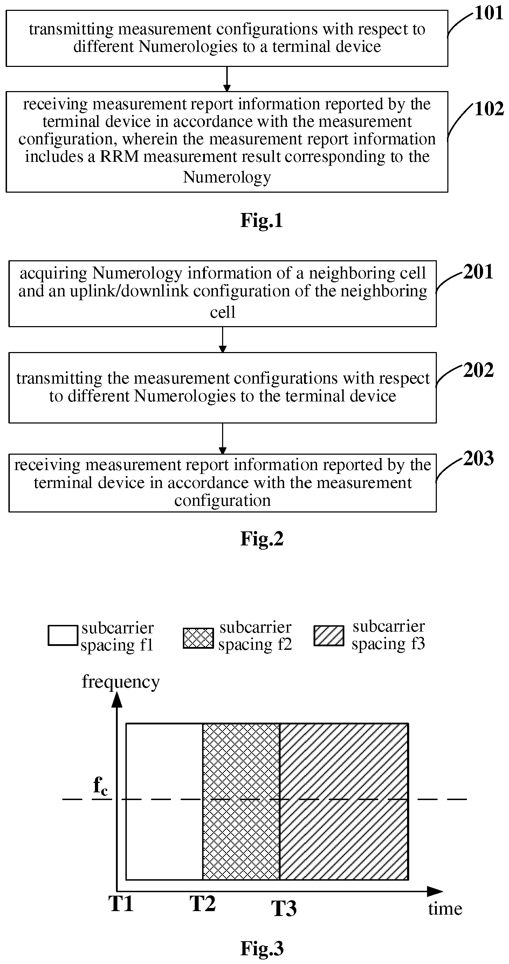

The present disclosure will briefly describe a measurement configuration method used in a network device in association with the drawings. As shown in Fig.1, in some embodiments of the present disclosure, the measurement configuration method may include the following steps.

Step 101: transmitting measurement configurations with respect to different Numerologies to a terminal device.

Numerology may also be called as reference configuration or numerical configuration. Different Numerology configurations may correspond to different subcarrier spacings, different frequency-domain resource bandwidths or different Cyclic Prefixes (CPs), and different Numerology configurations may be reused. The measurement configuration may include Numerology information, and the Numerology information may include at least one of a frequency-domain resource bandwidth, a subcarrier spacing and a cyclic prefix of a Numerology configuration. The measurement configuration may be configured by the network device for the terminal device of a system where different Numerologies are reused. When the terminal device enters a coverage range of the system where different Numerologies are reused, RRM measurement may be performed on radio channels in the system in accordance with the measurement configuration.

Sep 102: receiving measurement report information reported by the terminal device in accordance with the measurement configuration, wherein the measurement report information includes a RRM measurement result corresponding to the Numerology.

The terminal device may perform the RRM measurement corresponding to the respective Numerology in accordance with the measurement configuration so as to acquire the corresponding RRM measurement result, and then report the corresponding measurement report information when the RRM measurement result meets a predetermined condition. The network device may receive the measurement report information reported by the terminal device, so as to manage the terminal device, e.g., perform access control and mobility management, in accordance with the RRM measurement result.

According to the embodiments of the present disclosure, the network device may configure the measurement configurations with respect to different Numerologies for the terminal device, so as to control the terminal device to perform the RRM measurement in a to-be-measured cell with respect to each Numerology in accordance with the measurement configuration, and report the measurement report information when the RRM measurement result meets the predetermined condition. As a result, it is able to perform the RRM measurement for a system where different Numerologies are reused.

The measurement configuration method has been described briefly hereinabove in conjunction with Fig.1 in some embodiments of the present disclosure, and it will be described hereinafter in more details in conjunction with the drawings as well as specific application scenarios.

As shown in Fig.2, the measurement configuration method may include the following steps.

Step 201: acquiring Numerology information of a neighboring cell and an uplink/downlink configuration of the neighboring cell.

The uplink/downlink configuration may be adopted to indicate position information of an uplink/downlink channel resource of the neighboring cell. For the system where various Numerologies are reused, the network device (e.g., a gNB) needs to exchange the Numerology information with a base station to which the neighboring cell belongs through an Xn interface or another interface, and the Numerology information includes information on all of a frequency-domain resource bandwidth, a subcarrier spacing and a CP of a corresponding Numerology configuration. When the Numerology configuration changes, a base station needs to notify the neighboring cell of new Numerology information, and exchange the uplink/downlink configuration with the neighboring cell, so as to enable the terminal device to acquire uplink/downlink configuration about a serving cell and the neighboring cell and determine a time point for performing the RRM measurement. In this way, it is able to prevent the occurrence of repeated searching and measurement operations made by the terminal device, thereby to reduce the power consumption of the terminal device.

Step202: transmitting the measurement configurations with respect to different Numerologies to the terminal device.

During the RRM measurement, the terminal device needs to acquire current Numerology information. Hence, the network device needs to configure the corresponding measurement configuration for the terminal device in accordance with Numerologies supported by the network device or a Numerology currently adopted by the network device. The measurement configuration may include Numerology information, and the Numerology information may include at least one of a frequency-domain resource bandwidth, a subcarrier spacing and a CP of a Numerology configuration.

To be specific, there may exist at least the following two application scenarios in Step 202.

Application scenario 1: the network device may configure the measurement configuration with respect to one of the Numerologies supported by the terminal device for the terminal device, and transmit the measurement configuration to the terminal device. When the terminal device supports various Numerologies, the network device may merely configure the Numerology currently adopted by the terminal device or a certain Numerology which has been adopted for a long term for the terminal device. For example, the network device may merely configure the measurement configuration with respect to one of the Numerologies which are currently adopted for the transmission of data for the terminal device, or configure the measurement configuration corresponding to a certain Numerology which has been adopted for a long term for the terminal device. For example, when the terminal device supports uRLLC and eMBB simultaneously and eMBB services are mainly performed by the terminal device (or a UE), the network device may configure the terminal device to perform the RRM measurement with respect to a Numerology for eMBB, and when uRLLC services are mainly performed by the UE, the network device may also configure the UE to perform the RRM measurement with respect to a Numerology for uRLLC.

Application scenario 2: the network device may configure the measurement configuration corresponding to at least two of the Numerologies supported by the terminal device for the terminal device, and transmit the measurement configuration to the terminal device.

In order to comprehensively measure radio channel quality of the to-be-measured cell, the network device may configure at least two of the Numerologies supported by the network device for the terminal device, i.e., configure the measurement configurations with respect to at least two of the Numerologies supported by the terminal device for the terminal device.

Regardless of the application scenario 1 or the application scenario 2, the measurement configuration configured by the network device may include at least one of Numerology information, a central frequency information of each cell in a to-be-measured cell list with respect to a corresponding Numerology, and information of an allowed measurement bandwidth of each cell with respect to a corresponding Numerology. The to-be-measured cell list may include a serving cell and a neighboring cell of the serving cell. The serving cell may include a Primary Cell (PCell) or a Primary/Secondary Cell (PSCell) or a Secondary Cell (SCell), and each neighboring cell may be a cell adjacent to the serving cell.

In the application scenario 2, the network device may configure the measurement configurations with respect to different Numerologies for the terminal device, and transmit the measurement configurations to the terminal device. To be specific, the measurement configurations may be configured and transmitted by the network device in at least the following two modes.

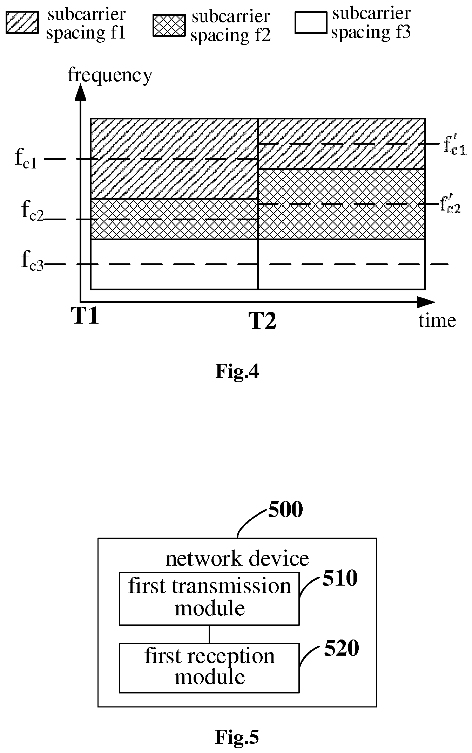

Mode 1: the network device may configure, for the terminal device, a first measurement configuration with respect to each of the at least two Numerologies in a separate manner, and transmit the first measurement configuration to the terminal device. For the system where various Numerologies are reused (e.g., reused in a frequency-division manner or a time-division manner), the network device may configure the measurement configuration (e.g., measurement objects) with respect to different Numerologies for the terminal device. As shown in Fig.3, in the system where different Numerologies are reused in a time-division manner, there is merely one frequency $f_c$, but different Numerology configurations may be provided at different time points, so relevant information needs to added into the measurement configuration. For example, a subcarrier spacing of the Numerology may be f1 at a time point $T_1$, f2 at a time point $T_2$, and f3 at a time point $T_3$. As shown in Fig.4, in the system where different Numerologies are reuse in a frequency-division manner, a sub-band frequency corresponding to each Numerology may be a virtual central frequency.

When a sub-band corresponding to the Numerology changes (or the subcarrier spacing changes), the central frequency may change too. For example, central frequencies for three different Numerologies may be f1, f2 and f3 (i.e., subcarrier spacing f1, subcarrier spacing f2 and subcarrier spacing f3). The (virtual) central frequencies corresponding to the three Numerologies may be $f_{c1}$, $f_{c2}$ and $f_{c3}$ at the time point $T_1$, and may be $f'_{c1}$, $f'_{c2}$ and $f'_{c3}$ at the time point $T_2$. When the sub-band corresponding to the Numerology changes, the (virtual) central frequencies may change too.

The first measurement configuration may include at least one of a first Numerology information, a central frequency information of each cell in a to-be-measured cell list with respect to a first Numerology, and information of an allowed measurement bandwidth of each cell with respect to the first Numerology. The to-be-measured cell list may include a serving cell and a neighboring cell of the serving cell. The serving cell may include a PCell, a PSCell, or a SCell, and the neighboring cell may be a cell adjacent to the serving cell.

To be specific, the first measurement configuration may include first parameter information, second parameter information and third parameter information. The first parameter information (e.g., carrierFreq-NR) may indicate a (virtual) central frequency for each Numerology, and each value in a first parameter list (e.g., ARFCN-ValueNRList) corresponding to the first parameter information may indicate a frequency of each cell in a cell list. The second parameter information (e.g., allowedMeasBandwidth-NR) may indicate a (sub-band) bandwidth for each Numerology, and each value in a second parameter list (e.g., AllowedMeasBandwidthNRList) corresponding to the second parameter information may indicate a measurement bandwidth of each cell in the cell list at a corresponding frequency. The third parameter information (e.g., numerologyInfo) may indicate numerology information of the measurement, and it may include a subcarrier spacer, a CP and the like.

Mode 2: the network device may configure, for the terminal device, a second measurement configuration with respect to the at least two Numerologies at one time, and transmit the second measurement configuration to the terminal device. For the system where different Numerologies are reused, merely one measurement configuration may be configured for the terminal device with respect to the entire system bandwidth, and the measurement configuration may indicate a frequency and a bandwidth for each Numerology as well as Numerology information. In other words, for the system where different Numerologies are reused (e.g., reused in a frequency-division manner and a time-division manner), the network device may configure one second measurement configuration (e.g., measurement object) for the terminal device with respect to different Numerologies.

The second measurement configuration may include at least one of at least one second Numerology information, a central frequency information of each cell in a to-be-measured cell list for different second Numerologies, and information of an allowed measurement bandwidth of each cell for a corresponding second Numerology. The to-be-measured cell list may include a serving cell and a neighboring cell for the serving cell. The serving cell may include a PCell, a PSCell, or a SCell, and the neighboring cell may be a cell adjacent to the serving cell.

To be specific, the second measurement configuration may include fourth parameter information, fifth parameter information and sixth parameter information. The fourth parameter information (e.g., carrierFreq-NR field) may indicate a group of measurement frequencies for each cell in a cell list, each set in a fourth parameter list (e.g., ARFCN-ValueNRSetList) corresponding to the fourth parameter information may correspond to each cell in the cell list, and each value in the set may correspond to all frequencies to be measured for the cell with respect to the Numerology. The fifth parameter information (e.g., allowedMeasBandwidth-NR field) may indicate a group of measurement bandwidths for each cell in the cell list, each set in a fifth parameter list (e.g., AllowedMeasBandwidthNRSetList) corresponding to the fifth parameter information may correspond to each cell in the cell list, and each value in the set may correspond to all measurement bandwidths to be measured for the cell with respect to the Numerology. The sixth parameter information (e.g., numerologyInfo) may indicate a group of Numerology information for each cell in the cell list, each set in a sixth parameter list (e.g., NumerologyInfos-SetList) corresponding to the sixth parameter information may correspond to each cell in the cell list, and each value in the set may correspond to information of the Numerology to be measured in the cell. For the second measurement configuration, the values in all of the sets in ARFCN-ValueNRSetList, AllowedMeasBandwidth-NRSetList and NumerologyInfoSetList may correspond to each other in a one-to-one manner.

Prior to Step 202, the measurement configuration method may further include configuring a dedicated Reference Signal (RS) for the RRM measurement with respect to different Numerologies for the terminal device. In other words, in order to prevent the RRM measurement from being performed frequently, the network device may configure the dedicated RS for the RRM measurement, so as to perform the measurement on the entire frequency band. A dedicated Numerology may be adopted by the RS, and the RS may be transmitted on the entire frequency band or occupy a part of the bandwidth. In this way, a RRM measurement mechanism in the related art may be adopted. The Numerology for the RS may be specified in a standard, i.e., a subcarrier spacing adopted by the RS may be set in the standard or by the gNB. The RS for the RRM measurement may be configured periodically, and a configuration period may be notified to the neighboring cell via the Xn interface or another Radio Access Technical (RAT) interface.

Step 203: receiving measurement report information reported by the terminal device in accordance with the measurement configuration.

The terminal device may perform the RRM measurement in accordance with the measurement configuration configured by the network device, and report the measurement report information when a RRM measurement result meets a predetermined condition.

The terminal device may report the measurement report information in accordance with a trigger event in the measurement configuration. When the RRM measurement result obtained through the measurement meets a predetermined trigger event, the reporting of the measurement report information may be triggered. To be specific, Step 203 may include receiving the measurement report information reported by the terminal device in accordance with the trigger event in the measurement configured information. The trigger event may include at least one of: a first trigger event where channel quality measured with respect to each of the Numerologies supported by the serving cell is greater than a first threshold (e.g., EventA1-1 may be set as that the channel quality measured with respect to each of the Numerologies supported by the serving cell is greater than a threshold); a second trigger event where the channel quality measured with respect to at least one of the Numerologies supported by the serving cell is greater than a second threshold (e.g., EventAl-2 may be set as that the channel quality measured with respect to at least one of the Numerologies supported by the serving cell is greater than a threshold); a third trigger event where the channel quality measured with respect to each of the Numerologies supported by the serving cell is less than a third threshold (e.g., EventA2-1 may be set as that the channel quality measured with respect to each of the Numerologies supported by the serving cell is less than a threshold); a fourth trigger event where the channel quality measured with respect to at least one of the Numerologies supported by the serving cell is less than a fourth threshold (e.g., EventA2-2 may be set as that the channel quality measured with respect to at least one of the Numerologies supported by the serving cell is less than a threshold); a fifth trigger event where the channel quality measured with respect to each of the Numerologies supported by the neighboring cell is better than the channel quality measured with respect to each of the Numerologies supported by the PCell or the PSCell (e.g., EventA3-1 may be set as that the channel quality measured with respect to each of the Numerologies supported by the neighboring cell offsets better than the channel quality measured with respect to each of the Numerologies supported by the PCell or the PSCell; a sixth trigger event where the channel quality measured with respect to at least one of the Numerologies supported by the neighboring cell is better than the channel quality measured with respect to a corresponding Numerology supported by the PCell or PSCell (e.g., EventA3-2 may be set as that the channel quality measured with respect to at least one of the Numerologies supported by the neighboring cell offsets better than the channel quality measured with respect to a corresponding Numerology supported by the PCell or PSCell); a seventh trigger event where the channel quality measured with respect to each of the Numerologies supported by the neighboring cell is greater than a fifth threshold (e.g., EventA4-1 may be set as that the channel quality measured with respect to each of the Numerologies supported by the neighboring cell is greater than a threshold); an eighth trigger event where the channel quality measured with respect to at least one of the Numerologies supported by the neighboring cell is greater than a sixth threshold (e.g., EventA4-2 may be set as that the channel quality measured with respect to at least one of the Numerologies supported by the neighboring cell is greater than a threshold); a ninth trigger event where the channel quality measured with respect to each of the Numerologies supported by the PCell or PSCell is less than a seventh threshold and the channel quality measured with respect to each of the Numerologies supported by the neighboring cell is greater than an eighth threshold (e.g., EventA5-1 may be set as that the channel quality measured with respect to each of the Numerologies supported by the PCell or PSCell is less than a threshold 1 and the channel quality measured with respect to each of the Numerologies supported by the neighboring cell is greater than a threshold 2); a tenth trigger event where the channel quality measured with respect to at least one of the Numerologies supported by the PCell or PSCell is lower than a ninth threshold and the channel quality measured with respect to the corresponding Numerology supported by the neighboring cell is greater than a tenth threshold (e.g., EventA5-2 may be set as that the channel quality measured with respect to at least one of the Numerologies supported by the PCell or PSCell is lower than a threshold 1 and the channel quality measured with respect to the corresponding Numerology supported by the neighboring cell is greater than a threshold 2); an eleventh trigger event where the channel quality measured with respect to each of the Numerologies supported by the neighboring cell is better than the channel quality measured with respect to each of the Numerologies supported by the SCell (e.g., EventA6-1 may be set as that the channel quality measured with respect to each of the Numerologies supported by the neighboring cell offsets better than the channel quality measured with respect to each of the Numerologies supported by the SCell); and a twelfth trigger event where the channel quality measured with respect to at least one of the Numerologies supported by the neighboring cell is better than the channel quality measured with respect to the corresponding Numerology supported by the SCell (e.g., EventA6-2 may be set as that the channel quality measured with respect to at least one of the Numerologies supported by the neighboring cell offsets better than the channel quality measured with respect to the corresponding Numerology supported by the SCell).

To be specific, Step 203 may be implemented in at least the following two modes.

Mode 3: receiving the plurality of measurement report information reported by the terminal device in a separate manner in accordance with the measurement configurations with respect to different Numerologies. The measurement report information may include RRM measurement results corresponding to different Numerologies respectively.

The terminal device may report, in a separate manner, the RRM measurement results with respect to different Numerologies to the network device, and the network device may receive the corresponding measurement report information. Through reporting the RRM measurement results with respect to different Numerologies in a separate manner, the network device may accurately acquire the radio channel quality with respect to each of the different Numerologies, and a relatively small data volume may be reported each time, so it is able to provide a relatively low latency and meet the latency requirement.

Mode 4: receiving the measurement report information reported at one time by the terminal device in accordance with the measurement configurations with respect to different Numerologies. The measurement report information may include an average value of all of the RRM measurement results with respect to different Numerologies.

The RRM measurement results with respect to different Numerologies may be carried and reported in a single measurement report information, i.e., in this scenario, the network device may acquire the RRM measurement results with respect to different Numerologies merely through one measurement report information. The RRM measurement result corresponding to each Numerology and a correspondence between the Numerologies and the RRM measurement results may be carried and reported in one measurement report information, or the average value of the RRM measurement results with respect to different Numerologies may be calculated, and carried and reported in the one measurement report information. Through reporting the RRM measurement results with respect to different Numerologies in one measurement report information, it is able to reduce the power consumption for the terminal device, reduce the quantity of unnecessary interaction processes, and save the network transmission resources.

To be specific, when the received measurement report information includes all of the RRM measurement results with respect to different Numerologies, it is necessary to explicitly or implicitly indicate the correspondence between the RRM measurement results and the Numerologies, thereby to prevent the RRM measurement results from being confused with each other by the network device.

When the received measurement report information includes the average value of all of the RRM measurement results with respect to different Numerologies, the average value may be calculated through the following equation (taking Reference Signal Receiving Power (RSRP) as an example): RSRP = $\frac{1}{N}\sum_{i=1}^{N}\frac{B_i}{B}RSRP_i$, where RSRP represents the average value of the RSRPs with respect to different Numerologies, N represents the quantity of the to-be-measured Numerologies, B represents a total bandwidth of the system, $B_i$ represents a sub-band corresponding to Numerology$_i$, and RSRP$_i$ represents the RSRP measured with respect to Numerology$_i$. In addition, Received Signal Strength Indication (RSSI) may also be calculated in a same way through averaging of weighted values. A value of Reference Signal Receiving Quality (RSRQ) may be acquired in accordance with RSRP and RSSI.

According to the embodiments of the present disclosure, the network device may configure the measurement configurations with respect to different Numerologies for the terminal device, such that the terminal device may be controlled to perform the RRM measurement on the to-be-measured cell with respect to different Numerologies in accordance with the measurement configuration, and report the measurement report information when the RRM measurement result meets a predetermined condition. As a result, it is able to perform the RRM measurement for the system where different Numerologies are reused. In addition, the network device may further configure the dedicated RS for the RRM measurement, so as to perform the RRM measurement on the entire frequency band, thereby to prevent the RRM measurement from being performed frequently.

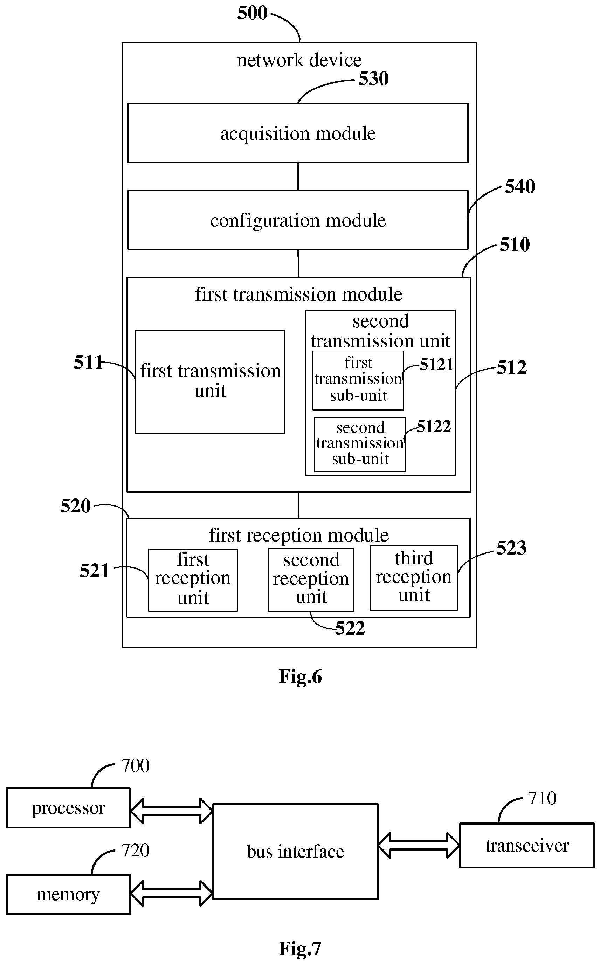

The measurement configuration methods in different scenarios has been described hereinabove with reference to the embodiment of Fig.1 and the embodiment of Figs.2-4, and the network devices corresponding to the measurement configuration methods will be described hereinafter in conjunction with Figs.5 and 6.

As shown in Fig.5, the present disclosure provides in some embodiments a network device 500 capable of implementing the measurement configuration method as mentioned in the embodiment of Fig.1 and the embodiment of Figs.2-4 (i.e., transmitting measurement configurations with respect to different Numerologies to a terminal device), the measurement configuration including Numerology information, the Numerology information including at least one of a frequency-domain resource bandwidth, a subcarrier spacing and a cyclic prefix of a Numerology configuration; and receiving measurement report information reported by the terminal device in accordance with the measurement configuration, the measurement report information including details of the method of a RRM measurement result corresponding to each Numerology, with a same technical effect. To be specific, the network device may include: a first transmission module 510 configured to transmit measurement configurations with respect to different Numerologies to a terminal device, wherein the measurement configuration includes Numerology information, and the Numerology information includes at least one of a frequency-domain resource bandwidth, a subcarrier spacing and a cyclic prefix of a Numerology configuration;; and a first reception module 520 configured to receive measurement report information reported by the terminal device in accordance with the measurement configuration, wherein the measurement report information includes a RRM measurement result corresponding to the Numerology.

In a possible embodiment of the present disclosure, the network device 500 may further include an acquisition module 530 configured to acquire Numerology information of a neighboring cell and uplink/downlink measurement information of the neighboring cell. The uplink/downlink configuration may be adopted to indicate position information of an uplink/downlink channel resource of the neighboring cell.

In a possible embodiment of the present disclosure, the first transmission module 510 may include: a first transmission unit 511 configured to configure, for the terminal device, the measurement configuration with respect to one of the Numerologies supported by the terminal device, and transmit the measurement configuration to the terminal device; or a second transmission unit 512 configured to configure, for the terminal device, the measurement configurations with respect to at least two of the Numerologies supported by the terminal device, and transmit the measurement configurations to the terminal device.

The measurement configuration may include at least one of Numerology information, a central frequency information of each cell in a to-be-measured cell list with respect to a corresponding Numerology, and information of an allowed measurement bandwidth of each cell with respect to a corresponding Numerology. The to-be-measured cell list may include a serving cell and a neighboring cell of the serving cell.

In a possible embodiment of the present disclosure, the second transmission unit 512 may include: a first transmission sub-unit 5121 configured to configure, for the terminal device, a first measurement configuration with respect to each of the at least two Numerologies in a separate manner, and transmitting the first measurement configurations to the terminal device; or a second transmission sub-unit 5122 configured to configure, for the terminal device, a second measurement configuration with respect to the at least two Numerologies at one time, and transmit the second measurement configuration to the terminal device.

The first measurement configuration may include at least one of a first Numerology information, a central frequency information of each cell in a to-be-measured cell list for a first Numerology, and information of an allowed measurement bandwidth of each cell for the first Numerology. The to-be-measured cell list may include a serving cell and a neighboring cell of the serving cell.

The second measurement configuration may include at least one of: at least one second Numerology information, a central frequency information of each cell in a to-be-measured cell list for different second Numerologies, and information of an allowed measurement bandwidth of each cell with respect to a corresponding second Numerology. The to-be-measured cell list may include a serving cell and a neighboring cell of the serving cell.

In a possible embodiment of the present disclosure, the first reception module 520 may include: a first reception unit 521 configured to receive measurement report information reported in a separate manner by the terminal device in accordance with the measurement configurations with respect to the different Numerologies, wherein the plurality of measurement report information include RRM measurement results with respect to different Numerologies respectively; or a second reception unit 522 configured to receive the measurement report information reported at one time by the terminal device in accordance with the measurement configurations with respect to different Numerologies, wherein the measurement report information includes an average value of all of the RRM measurement results with respect to the different Numerologies.

In a possible embodiment of the present disclosure, the first reception module 520 may further include a third reception unit 523 configured to receive the measurement report information reported by the terminal device in accordance with a trigger event in the measurement configuration, wherein the trigger event includes at least one of: a first trigger event where channel quality measured with respect to each of the Numerologies supported by a serving cell is greater than a first threshold; a second trigger event where the channel quality measured with respect to at least one of the Numerologies supported by the serving cell is greater than a second threshold; a third trigger event where the channel quality measured with respect to each of the Numerologies supported by the serving cell is less than a third threshold; a fourth trigger event where the channel quality measured with respect to at least one of the Numerologies supported by the serving cell is less than a fourth threshold; a fifth trigger event where the channel quality measured with respect to each of the Numerologies supported by a neighboring cell is better than the channel quality measured with respect to each of the Numerologies supported by a PCell or a PSCell; a sixth trigger event where the channel quality measured with respect to at least one of the Numerologies supported by the neighboring cell is better than the channel quality with respect to a corresponding Numerology supported by the PCell or the PSCell; a seventh trigger event where the channel quality measured with respect to each of the Numerologies supported by the neighboring cell is greater than a fifth threshold; an eighth trigger event where the channel quality measured with respect to at least one of the Numerologies supported by the neighboring cell is greater than a sixth threshold; a ninth trigger event where the channel quality measured with respect to each of the Numerologies supported by the PCell or the PSCell is less than a seventh threshold and the channel quality measured with respect to each of the Numerologies supported by the neighboring cell is greater than an eighth threshold; a tenth trigger event where the channel quality measured with respect to at least one of the Numerologies supported by the PCell or the PSCell is lower than a ninth threshold and the channel quality measured with respect to the corresponding Numerology supported by the neighboring cell is greater than a tenth threshold; an eleventh trigger event where the channel quality measured with respect to each of the Numerologies supported by the neighboring cell is better than the channel quality measured with respect to each of the Numerologies supported by a SCell; and a twelfth trigger event where the channel quality measured with respect to at least one of the Numerologies supported by the neighboring cell is better than the channel quality measured with respect to the corresponding Numerology supported by the SCell.

In a possible embodiment of the present disclosure, the network device 500 may further include a configuration module 540 configured to configure a dedicated RS for the RRM measurement with respect to different Numerologies for the terminal device.

It should be appreciated that, the network device may correspond to the above-mentioned measurement configuration method, and the network device may be adopted to implement the above-mentioned measurement configuration method, so the implementation of the network device may refer to that of the measurement configuration method with a same technical effect. According to the network device in the embodiments of the present disclosure, the network device may configure the measurement configurations with respect to different Numerologies for the terminal device, such that the terminal device may be controlled to perform the RRM measurement on the to-be-measured cell with respect to different Numerologies in accordance with the measurement configuration, and report the measurement report information when the RRM measurement result meets a predetermined condition. As a result, it is able to perform the RRM measurement for the system where different Numerologies are reused.

In order to achieve the above purpose in a better manner, as shown in Fig.7, the present disclosure further provides in some embodiments a network device, which includes a processor 700, a memory 720 connected to the processor 700 via a bus interface, and a transceiver 710 connected to the processor 700 via the bus interface. The memory 720 is configured to store therein programs and data for the operation of the processor. The transceiver 710 is configured to transmit data information or pilot signals, and receive an uplink control channel.

The processor 700 is configured to call and execute the programs and data stored in the memory 720.

The transceiver 710 is configured to receive and transmit data under the control of the processor 700, so as to: transmit measurement configurations with respect to different Numerologies to a terminal device, wherein the measurement configuration includes Numerology information, and the Numerology information includes at least one of a frequency-domain resource bandwidth, a subcarrier spacing and a cyclic prefix of a Numerology configuration; and receive measurement report information reported by the terminal device in accordance with the measurement configuration, wherein the measurement report information includes a RRM measurement result corresponding to the Numerology.

In Fig.7, bus architecture may include a number of buses and bridges connected to each other, so as to connect various circuits for one or more processors such as the processor 700 and one or more memories such as the memory 720. In addition, the bus architecture may be used to connect various other circuits, such as a circuit for a peripheral device, a circuit for a voltage stabilizer and a power management circuit. The bus interface may be provided, and the transceiver 710 may consist of a plurality of elements, i.e., a transmitter and a receiver for communication with various other devices over a transmission medium. The processor 700 may take charge of managing the bus architecture as well as general processings. The memory 720 may store therein data for the operation of the processor 700.

To be specific, the processor 700 is further configured to acquire Numerology information of a neighboring cell and uplink/downlink measurement information of the neighboring cell. The uplink/downlink configuration may be adopted to indicate position information of an uplink/downlink channel resource o the neighboring cell.

To be specific, the processor 700 is further configured to: configure the measurement configuration for one of the Numerologies supported by the terminal device for the terminal device, and transmit through the transceiver 710 the measurement configuration to the terminal device; or configure the measurement configuration corresponding to at least two of the Numerologies supported by the terminal device for the terminal device, and transmit through the transceiver 710 the measurement configuration to the terminal device.

The measurement configuration may include at least one of Numerology information, a central frequency information of each cell in a to-be-measured cell list for a corresponding Numerology, and information of an allowed measurement bandwidth of each cell for a corresponding Numerology. The to-be-measured cell list may include a serving cell and a neighboring cell of the serving cell.

To be specific, the processor 700 is further configured to: configure a first measurement configuration with respect to each of the at least two Numerologies in a separate manner for the terminal device, and transmit through the transceiver 710 the first measurement configuration to the terminal device; or configure a second measurement configuration with respect to the at least two Numerologies at one time for the terminal device, and transmit through the transceiver 710 the second measurement configuration to the terminal device.

Specifically, the first measurement configuration may include at least one of: a first Numerology information, a central frequency information of each cell in a to-be-measured cell list with respect to a first Numerology, and information of an allowed measurement bandwidth of each cell with respect to the first Numerology. The to-be-measured cell list may include a serving cell and a neighboring cell of the serving cell.

The second measurement configuration may include at least one of: at least one second Numerology information, a central frequency information of each cell in a to-be-measured cell list with respect to different second Numerologies, and information of an allowed measurement bandwidth of each cell with respect to a corresponding second Numerology. The to-be-measured cell list may include a serving cell and a neighboring cell of the serving cell.

The transceiver 710 is further configured to: receive measurement report information reported in a separate manner by the terminal device in accordance with the measurement configurations with respect to the different Numerologies, wherein the plurality of measurement report information include RRM measurement results corresponding to different Numerologies respectively; or; or receive the measurement report information reported at one time by the terminal device in accordance with the measurement configurations with respect to different Numerologies, wherein the measurement report information includes an average value of all of the RRM measurement results with respect to the different Numerologies..

To be specific, the transceiver 710 is further configured to receive the measurement report information reported by the terminal device in accordance with a trigger event in the measurement configuration, wherein the trigger event includes at least one of: a first trigger event where channel quality measured with respect to each of the Numerologies supported by a serving cell is greater than a first threshold; a second trigger event where the channel quality measured with respect to at least one of the Numerologies supported by the serving cell is greater than a second threshold; a third trigger event where the channel quality measured with respect to each of the Numerologies supported by the serving cell is less than a third threshold; a fourth trigger event where the channel quality measured with respect to at least one of the Numerologies supported by the serving cell is less than a fourth threshold; a fifth trigger event where the channel quality measured with respect to each of the Numerologies supported by a neighboring cell is better than the channel quality measured with respect to each of the Numerologies supported by a PCell or a PSCell; a sixth trigger event where the channel quality measured with respect to at least one of the Numerologies supported by the neighboring cell is better than the channel quality with respect to a corresponding Numerology supported by the PCell or the PSCell; a seventh trigger event where the channel quality measured with respect to each of the Numerologies supported by the neighboring cell is greater than a fifth threshold; an eighth trigger event where the channel quality measured with respect to at least one of the Numerologies supported by the neighboring cell is greater than a sixth threshold; a ninth trigger event where the channel quality measured with respect to each of the Numerologies supported by the PCell or the PSCell is less than a seventh threshold and the channel quality measured with respect to each of the Numerologies supported by the neighboring cell is greater than an eighth threshold; a tenth trigger event where the channel quality measured with respect to at least one of the Numerologies supported by the PCell or the PSCell is lower than a ninth threshold and the channel quality measured with respect to the corresponding Numerology supported by the neighboring cell is greater than a tenth threshold; an eleventh trigger event where the channel quality measured with respect to each of the Numerologies supported by the neighboring cell is better than the channel quality measured with respect to each of the Numerologies supported by a SCell; and a twelfth trigger event where the channel quality measured with respect to at least one of the Numerologies supported by the neighboring cell is better than the channel quality measured with respect to the corresponding Numerology supported by the SCell.

To be specific, the transceiver 700 is further configured to configure a dedicated RS for the RRM measurement with respect to the different Numerologies for the terminal device.

According to the embodiments of the present disclosure, the network device may configure the measurement configurations with respect to different Numerologies for the terminal device, such that terminal device may perform the RRM measurement on the to-be-measured cell with respect to different Numerologies in accordance with the measurement configuration, and report the measurement report information when the RRM measurement result meets a predetermined condition. As a result, it is able to perform the RRM measurement for the system where different Numerologies are reused.

The measurement configuration method at a network device side and the network device have been described hereinabove, and a measurement configuration method at a terminal device side will be described hereinafter in conjunction with the drawings.

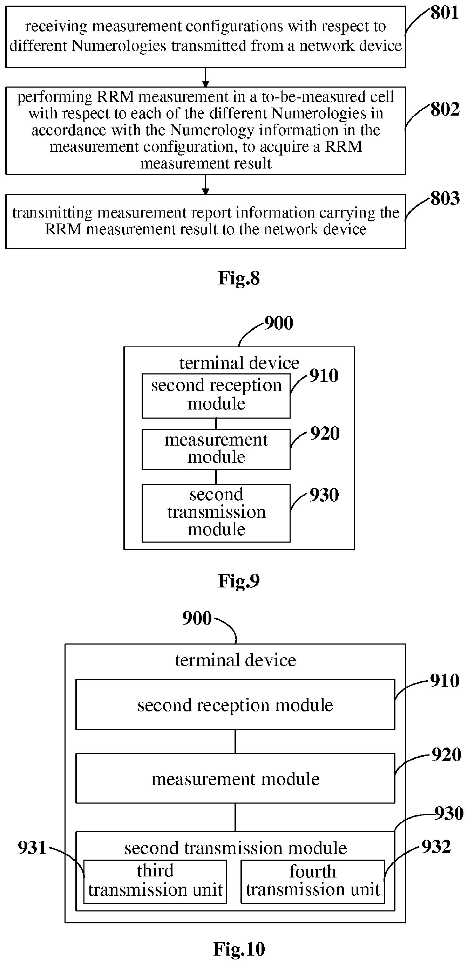

The present disclosure further provides in some embodiments a measurement configuration method which, as shown in Fig.8, includes the following steps.

Step 801: receiving measurement configurations with respect to different Numerologies transmitted from a network device.

The measurement configuration includes Numerology information, and the Numerology information includes at least one of a frequency-domain resource bandwidth, a subcarrier spacing and a cyclic prefix of a Numerology configuration. Different Numerologies may correspond to different radio resources, i.e., different Numerologies may correspond to different frequency-domain resource bandwidths, different subcarrier spacings or different cyclic prefixes. For the system where multiple Numerologies are reused, the network device (e.g., a gNB) needs to exchange Numerology information with a neighboring cell via an Xn interface or another interface. Different from the Numerology information in the measurement configuration, the Numerology information exchanged by the base station with a base station of the neighboring cell may include all of the subcarrier spacing, the CP and the frequency-domain resource bandwidth corresponding to the Numerology.

Step 802: performing RRM measurement in a to-be-measured cell with respect to each of the different Numerologies in accordance with the Numerology information in the measurement configuration, to acquire a RRM measurement result.

A corresponding radio channel may be acquired in accordance with the Numerology information in the measurement configuration, so the terminal device may perform the RRM measurement on the radio channel corresponding to the measurement configuration in accordance with the measurement configuration, so as to acquire the corresponding RRM measurement result. The RRM measurement result may include at least one of RSRQ, RSRP and RSSI.

Step 803: transmitting measurement report information carrying the RRM measurement result to the network device.

To be specific, the measurement configuration may further include a condition for reporting the RRM measurement result. When the RRM measurement result acquired by the terminal device through the measurement on the radio channel for a to-be-measured cell meets the condition, the terminal device may report the measurement report information carrying the RRM measurement result to the network device, so as to enable the network device to manage the terminal device, e.g., perform access control and mobility management, in a more appropriate manner in accordance with the RRM measurement result.

To be specific, the measurement configuration configured by the network device for the terminal device may include measurement configurations with respect to different Numerologies, and the terminal device may perform the measurement on the radio channel with respect to different Numerologies in accordance with the measurement configuration, so it is able to acquire the RRM measurement result corresponding to each Numerology. The RRM measurement result may be reported in the following two modes.

Mode 1: the RRM measurement results with respect to different Numerologies may be carried in corresponding plurality of measurement report information, and then transmitted to the network device. Each of the RRM measurement result may correspond to a respective one of the Numerologies, i.e., the RRM measurement results with respect to different Numerologies may be reported in a separate manner to the network device. Through reporting the RRM measurement results with respect to different Numerologies in a separate manner, the network device may accurately acquire the radio channel quality with respect to each of the different Numerologies, and a relatively small data volume may be reported each time, so it is able to provide a relatively low latency and meet the latency requirement.

Mode 2: the RRM measurement results with respect to different Numerologies may be carried in one measurement report information and then transmitted to the network device. The measurement report information may include the RRM measurement result corresponding to each Numerology, or an average value of all of the RRM measurement results with respect to different Numerologies. In other words, the RRM measurement results with respect to different Numerologies may be carried and reported in one measurement report information. The RRM measurement result corresponding to each Numerology and a correspondence between the Numerologies and the RRM measurement results may be carried and reported in one measurement report information, or the average value of the RRM measurement results with respect to different Numerologies may be calculated and carried in the one measurement report information. Through reporting the RRM measurement results with respect to different Numerologies in one measurement report information, it is able to reduce the power consumption for the terminal device, reduce the quantity of unnecessary interaction processes, and save the network transmission resources.

According to the embodiments of the present disclosure, the terminal device may perform the RRM measurement on the to-be-measured cell with respect to different Numerologies in accordance with the measurement configurations with respect to different Numerologies configured by the network device, so as to acquire the corresponding RRM measurement results, and report the measurement report information carrying the RRM measurement result to the network device when the RRM measurement result meets a predetermined condition. As a result, it is able to perform the RRM measurement for the system where different Numerologies are reused.

The measurement configuration method in different scenarios has been described hereinabove with reference to Fig.8, and the corresponding terminal device will be described hereinafter in conjunction with Figs.9 and 10.

As shown in Fig.9, the present disclosure further provides in some embodiments a terminal device 900 capable of implementing the measurement configuration method in Fig.8 (i.e., receiving measurement configurations with respect to different Numerologies transmitted from a network device; performing RRM measurement in a to-be-measured cell with respect to each of the different Numerologies in accordance with the Numerology information in the measurement configuration, to acquire a RRM measurement result; and transmitting the measurement report information carrying the RRM measurement result to the network device) with a same beneficial effect. To be specific, the terminal device may include: a second reception module 910 configured to receive measurement configurations with respect to different Numerologies transmitted from a network device, wherein the measurement configuration includes Numerology information, and the Numerology information includes at least one of a frequency-domain resource bandwidth, a subcarrier spacing and a cyclic prefix of a Numerology configuration; a measurement module 920 configured to perform RRM measurement in a to-be-measured cell with respect to each of the different Numerologies in accordance with the Numerology information in the measurement configuration, to acquire a RRM measurement result; and a second transmission module 930 configured to transmit measurement report information carrying the RRM measurement result to the network device.

In a possible embodiment of the present disclosure, the second transmission module 930 may include: a third transmission unit 931 configured to transmit a plurality of measurement report information carrying the respective RRM measurement results with respect to different Numerologies to the network device, wherein each of the RRM measurement results corresponds to a respective one of the different Numerologies; or a fourth transmission unit 932 configured to transmit one measurement report information carrying the RRM measurement results with respect to the different Numerologies to the network device, wherein the measurement report information includes the RRM measurement result corresponding to each of the Numerologies, or an average value of all of the RRM measurement results with respect to the different Numerologies.

It should be appreciated that, the terminal device 900 may correspond to the above-mentioned measurement configuration method, and the terminal device 900 may be adopted to implement the above-mentioned measurement configuration method, so the implementation of the terminal device may refer to that of the measurement configuration method with a same beneficial effect. According to the embodiments of the present disclosure, the terminal device 900 may perform the RRM measurement on the to-be-measured cell with respect to different Numerologies in accordance with the measurement configurations with respect to different Numerologies configured by the network device, so as to acquire the corresponding RRM measurement results, and report the measurement report information carrying the RRM measurement result to the network device when the RRM measurement result meets a predetermined condition. As a result, it is able to perform the RRM measurement for the system where different Numerologies are reused.

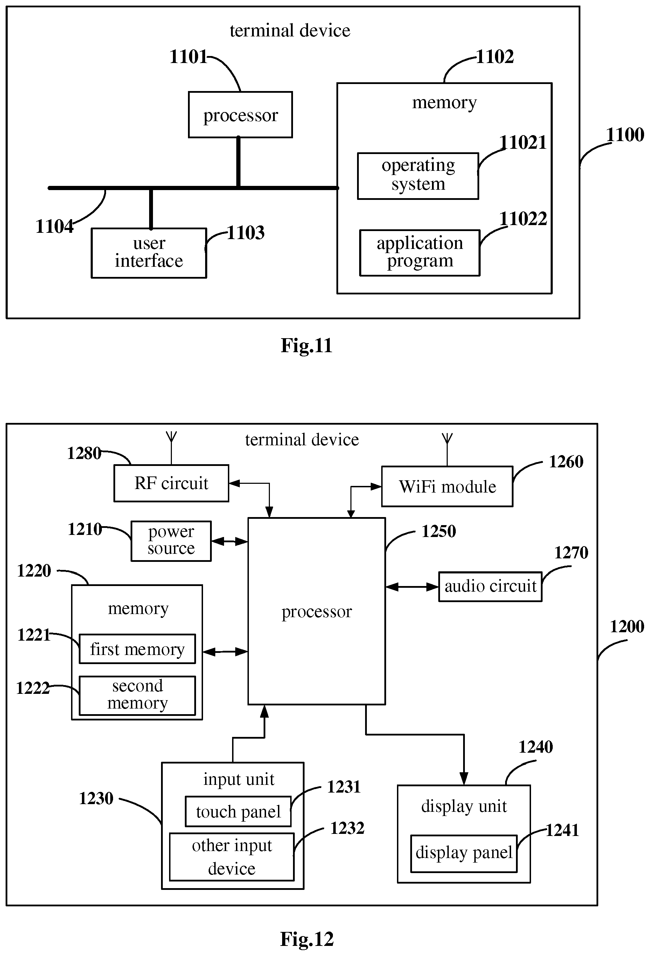

The present disclosure further provides in another embodiment a terminal device 1100 which, as shown in Fig.11, includes at least one processor 11101, a memory 1102 and a user interface 1103. The components of the UE 1100 may be coupled together through a bus system 1104. It should be appreciated that, the bus system 1105 is configured to achieve connection and communication among the components. Apart from a data bus, the bus system 1104 may further include a power source bus, a control bus and a state signal bus. For clarification, all of these buses in Fig.11 may be collectedly called as the bus system 1104.

The user interface 1103 may include a display or a pointing device (e.g., touch plate or touch panel).

It should be appreciated that, in the embodiments of the present disclosure, the memory 1102 may be a volatile memory, a nonvolatile memory or both. The nonvolatile memory may be a Read-Only Memory (ROM), a Programmable ROM (PROM), an Erasable PROM (EPROM), an Electrically EPROM (EEPROM) or a flash memory. The volatile memory may be a Random Access Memory (RAM) which serves as an external high-speed cache. Illustratively but nonrestrictively, the RAM may be any one of various memories, including Static RAM (SRAM), Dynamic RAM (DRAM), Synchronous DRAM (SDRAM), Double Data Rate SDRAM (DDRSDRAM), Enhanced SDRAM (ESDRAM), Synchronous Link DRAM (SLDRAM) or Direct Rambus RAM (DRRAM). The memory 1102 intends to include, but not limited to, the above-mentioned and any other appropriate memories.

In a possible embodiment of the present disclosure, the following elements may be stored in the memory 1102: an executable module or data structure, a subset or an extended set thereof, an operating system 11021 and an application 11022.

The operating system 11021 may include various system programs, e.g., a framework layer, a core layer and a driving layer, so as to implement various basic services and process hardware-based tasks. The application program 11022 may include various application programs, e.g., Media Player and Browser, so as to implement various application services. The programs for implementing the above-mentioned method may be included in the application program 11022.

In the embodiments of the present disclosure, through calling a program or instruction stored in the memory 1102, e.g., a program or instruction stored in the application program 11022, the processor 1101 is configured to: receive measurement configurations with respect to different Numerologies transmitted from a network device; perform RRM measurement in a to-be-measured cell with respect to each of the different Numerologies in accordance with the Numerology information in the measurement configuration, to acquire a RRM measurement result; and transmit measurement report information carrying the RRM measurement result to the network device. The measurement configuration may include Numerology information, and the Numerology information may include at least one of a frequency-domain resource bandwidth, a subcarrier spacing and a cyclic prefix of a Numerology configuration.

The above-mentioned method may be applied to, or implemented by, the processor 1101. The processor 1101 may be an Integrated Circuit (IC) chip having a signal processing capability. During the implementation, the steps of the above-mentioned method may be completed through an integrated logic circuit of hardware in the processor 1101 or instructions in the form of software. The processor 1101 may be a general-purpose processor, a Digital Signal Processor (DSP), an Application Specific Integrated Circuit (ASIC), a Field Programmable Gate Array (FPGA) or another programmable logic element, a discrete gate or transistor logic element, or a discrete hardware assembly, which may be used to implement or execute the methods, steps and logic diagrams in the embodiments of the present disclosure. The general purpose processor may be a microprocessor or any other conventional processor. The steps of the method in the embodiments of the present disclosure may be directly implemented by a decoding processor in the form of hardware, or a combination of hardware and software modules in the decoding processor. The software module may be located in a known storage medium such as an RAM, a flash memory, an ROM, a PROM, an EEPROM, or a register. The storage medium may be located in the memory 1102, and the processor 1101 may read information stored in the memory 1102 so as to implement the steps of the method in conjunction with the hardware.

It should be appreciated that, the embodiments of the present disclosure may be implemented by hardware, software, firmware, middleware, microcode or a combination thereof. For the hardware implementation, the processor may include one or more of an ASIC, a DSP, a DSP Device (DSPD), a Programmable Logic Device (PLD), an FPGA, a general-purpose processor, a controller, a microcontroller, a microprocessor, any other electronic unit capable of achieving the functions in the present disclosure, or a combination thereof.

For the software implementation, the scheme in the embodiments of the present disclosure may be implemented through modules capable of achieving the functions in the present disclosure (e.g., processes or functions). Software codes may be stored in the memory and executed by the processor. The memory may be implemented inside or outside the processor.

To be specific, the processor 1101 is further configured to: transmit a plurality of measurement report information carrying the respective RRM measurement results with respect to different Numerologies to the network device, wherein each of the RRM measurement results corresponds to a respective one of the different Numerologies; or transmit one measurement report information carrying the RRM measurement results with respect to the different Numerologies to the network device, wherein the measurement report information includes the RRM measurement result corresponding to each of the different Numerologies, or an average value of all of the RRM measurement results with respect to the different Numerologies.

According to the embodiments of the present disclosure, the terminal device 1100 may perform the RRM measurement on the to-be-measured cell with respect to different Numerologies in accordance with the measurement configurations with respect to different Numerologies configured by the network device, so as to acquire the corresponding RRM measurement results, and report the measurement report information carrying the RRM measurement result to the network device when the RRM measurement result meets a predetermined condition. As a result, it is able to perform the RRM measurement for the system where different Numerologies are reused.

The present disclosure further provides in some embodiments a terminal device as shown in Fig.12. To be specific, the terminal device 1200 may be a mobile phone, a flat-panel computer, a Personal Digital Assistant (PDA) or a vehicle-mounted computer.

In Fig.12, the terminal device 1200 may include a power source 1210, a memory 1220, an input unit 1230, a display unit 1240, a processor 1250, a Wireless Fidelity (WiFi) module 1260, an audio circuit 1270 and a Radio Frequency (RF) circuit 1280.

The input unit 1230 is configured to receive information inputted by a user, and generate a signal input related to user settings and function control of the terminal device 1200. To be specific, in the embodiments of the present disclosure, the input unit 1230 may include a touch panel 1231, which is also called as touch screen and configured to collect a touch operation made by the user on or in proximity to the touch panel (e.g., an operation made by the user through any appropriate object or attachment (e.g., finger or stylus) on the touch panel 1231), and drive a corresponding connection device in accordance with a predetermined program. In a possible embodiment of the present disclosure, the touch panel 1231 may include a touch detection device and a touch controller. The touch detection device is configured to detect a touch position of a user and a signal generated due to the touch operation, and transmit the signal to the touch controller. The touch controller is configured to receive touch information from the touch detection device, convert it into coordinates of a touch point, transmit the coordinates to the processor 1250, and receive and execute a command from the processor 1250. In addition, the touch panel 1231 may be of any one of various types, such as a resistive type, a capacitive type, an infrared type or a surface acoustic wave type. Besides the touch panel 1231, the input unit 1230 may further include another input device 1232 which includes, but not limited to, one or more of a physical keyboard, a functional button (e.g., a volume control button or an on/off button), a trackball, a mouse, and a joystick.

The display unit 1240 is configured to display information inputted by the user or information to be presented to the user, and various menu interfaces for the terminal device, and the display unit 1240 may include a display panel 1421. In a possible embodiment of the present disclosure, the display panel 1241 may be a Liquid Crystal Display (LCD) panel or an Organic Light-Emitting Diode (OLED) panel.

It should be appreciated that, the touch panel 1231 may cover the display panel 1241, so as to form a touch display panel. When the touch operation made on or in proximity to the touch display panel has been detected, the touch information may be transmitted to the processor 1250 so as to determine a type of a touch event. Then, the processor 1250 may provide corresponding visual output on the touch display panel in accordance with the type of the touch event.

The touch display panel may include an application interface display region and a commonly-used controls display region. An arrangement mode of the two display regions will not be particularly defined herein, e.g., one of the two display regions may be arranged above or under the other, or arranged to the left or the right of the other, so as to distinguish the two display regions from each other. The application interface display region may be adopted to display interfaces for application programs, and each interface may include an icon for at least one application program and/or an interface element such as widget desktop control. The application interface display region may also be a blank interface where no content is contained. The commonly-used controls display region may be adopted to display controls which are used frequently, e.g., setting button, interface number, scroll bar, or such application icons as telephone book icon.

The processor 1250 is a control center of the terminal device, and connected to each member of the entire terminal device via various interfaces and lines. The processor 1250 is configured to run or execute software programs and/or modules stored in a first memory 1221, and call data stored in a second memory 1222, so as to achieve various functions of the terminal device and process the data, thereby to monitor the terminal device. In a possible embodiment of the present disclosure, the processor 1250 may include one or more processing units.

In a possible embodiment of the present disclosure, the processor 1250 is configured to call the software program and/or module stored in the first memory 1221 and/or the data stored in the second memory 1222, so as to: receive measurement configurations with respect to different Numerologies transmitted from a network device; performing RRM measurement in a to-be-measured cell with respect to each of the different Numerologies in accordance with the Numerology information in the measurement configuration, to acquire an RRM measurement result; and transmit measurement report information carrying the RRM measurement result to the network device. The measurement configuration may include Numerology information, and the Numerology information may include at least one of a frequency-domain resource bandwidth, a subcarrier spacing and a cyclic prefix of a Numerology configuration.

To be specific, the processor 1250 is further configured to: transmit a plurality of measurement report information carrying the respective RRM measurement results with respect to different Numerologies to the network device, wherein each of the RRM measurement results corresponds to a respective one of the different Numerologies; or transmit one measurement report information carrying the RRM measurement results with respect to the different Numerologies to the network device, wherein the measurement report information includes the RRM measurement result corresponding to each of the different Numerologies, or an average value of all of the RRM measurement results with respect to the different Numerologies.

According to the embodiments of the present disclosure, the terminal device 1200 may perform the RRM measurement on the to-be-measured cell with respect to different Numerologies in accordance with the measurement configurations with respect to different Numerologies configured by the network device, so as to acquire the corresponding RRM measurement results, and report the measurement report information carrying the RRM measurement result to the network device when the RRM measurement result meets a predetermined condition. As a result, it is able to perform the RRM measurement for the system where different Numerologies are reused.

It should be appreciated that, units and steps described in the embodiments of the present disclosure may be implemented in the form of electronic hardware, or a combination of a computer program and the electronic hardware. Whether or not these functions are executed by hardware or software depends on specific applications or design constraints of the technical solution. A person skilled in the art may adopt different methods with respect to the specific applications so as to achieve the described functions, without departing from the scope of the present disclosure.

It should be further appreciated that, for convenience and clarification, operation procedures of the system, device and units described hereinabove may refer to the corresponding procedures in the above method embodiments, and thus will not be particularly defined herein.

It should be further appreciated that, the device and method may be implemented in any other ways. For example, the embodiments for the apparatus is merely for illustrative purposes, and the units are provided merely on the basis of their logic functions. During the actual application, the units may be provided in another manner, e.g. some modules or units may be combined together or integrated into another system. Alternatively, some functions of the module or units may be omitted or not executed. In addition, the coupling connection, direct coupling connection or communication connection between the modules or units may be implemented via interfaces, and the indirect coupling connection or communication connection between the modules or units may be implemented in an electrical or mechanical form or in any other form.

The units may be, or may not be, physically separated from each other. The units for displaying may be, or may not be, physical units, i.e., they may be arranged at an identical position, or distributed on a plurality of network elements. Parts or all of the units may be selected in accordance with the practical need, so as to achieve the purpose of the present disclosure.

In addition, the functional units in the embodiments of the present disclosure may be integrated into a processing unit, or the functional units may exist independently, or two or more functional units may be combined together.

In the case that the functional units are implemented in a software form and sold or used as a separate product, they may be stored in a computer-readable medium. Based on this, the technical solutions of the present disclosure, partial or full, or parts of the technical solutions of the present disclosure contributing to the related art, may appear in the form of software products, which may be stored in a storage medium and include several instructions so as to enable a computer equipment (for example, a personal computer, a server or network equipment) to execute all or parts of the steps of the method according to the embodiments of the present disclosure. The storage medium includes any medium capable of storing therein program codes, e.g., a universal serial bus (USB) flash disk, a mobile hard disk (HD), a read-only memory (ROM), a random access memory (RAM), a magnetic disk or an optical disk.

It should be further appreciated that, according to the device and the method in the embodiments of the present disclosure, the members and/or steps may be subdivided and/or recombined, which shall also be deemed as equivalents of the present disclosure. In addition, the steps for executing the above-mentioned processings may be performed in a chronological order. However, some steps may alternatively be performed in parallel, or independently of each other. It should be further appreciated that, after reading the descriptions of the present disclosure, it is able for a person skilled in the art, using a basic programming skill, to implement any or all steps of the method and any or all members of the device in any computing device (including a processor, a storage medium, and the like) or a network consisting of the computing devices, in the form of hardware, firmware, software or a combination thereof.

Hence, the purposes of the present disclosure may also be implemented by one program or a set of programs running on any computing device, e.g., a known general-purpose computer, or implemented merely by a program product including programs codes capable of implementing the method or device. In other words, this program product and a storage medium storing therein the program product also constitute a part of the present disclosure. Obviously, the storage medium may be any known storage medium or a storage medium that may occur in future. It should be further appreciated that, according to the device and the method in the embodiments of the present disclosure, the members and/or steps may be subdivided and/or recombined, which shall also be deemed as equivalents of the present disclosure. In addition, the steps for executing the above-mentioned processings may be performed in a chronological order. However, some steps may alternatively be performed in parallel, or independently of each other.

The above are merely preferred embodiments of the present disclosure. It should be appreciated that a person skilled in the art may make further modifications and improvements without departing from the spirit of the present disclosure, and these modifications and improvements shall also fall within the scope of the present disclosure.

**Claims**

1. A measurement configuration method used in a network device, wherein the measurement configuration method comprises:

   transmitting measurement configurations with respect to different Numerologies to a terminal device, wherein the measurement configuration comprises Numerology information, and the Numerology information comprises at least one of a frequency-domain resource bandwidth, a subcarrier spacing and a cyclic prefix of a Numerology configuration;
   receiving measurement report information reported by the terminal device in accordance with the measurement configuration, wherein the measurement report information comprises a Radio Resource Management (RRM) measurement result corresponding to the Numerology.

2. The measurement configuration method according to claim 1, wherein before transmitting the measurement configurations with respect to the different Numerologies to the terminal device, the measurement configuration method further comprises:
   acquiring Numerology information of a neighboring cell and an uplink/downlink configuration of the neighboring cell, wherein the uplink/downlink configuration is used to indicate position information of an uplink/downlink channel resource of the neighboring cell.

3. The measurement configuration method according to claim 1, wherein the transmitting the measurement configurations with respect to the different Numerologies to the terminal device comprises:

   configuring, for the terminal device, the measurement configuration with respect to one of the Numerologies supported by the terminal device, and transmitting the measurement configuration to the terminal device; or
   configuring, for the terminal device, the measurement configurations with respect to at least two of the Numerologies supported by the terminal device, and transmitting the measurement configurations to the terminal device.

4. The measurement configuration method according to claim 3, wherein the measurement configuration comprises at least one of:

   Numerology information, a central frequency information of each cell in a to-be-measured cell list with respect to the different Numerologies, and information of an allowed measurement bandwidth of each cell with respect to the different Numerologies,
   wherein the to-be-measured cell list comprises a serving cell and a neighboring cell of the serving cell.

5. The measurement configuration method according to claim 3, wherein configuring for the terminal device the measurement configurations with respect to the at least two of the Numerologies supported by the terminal device and transmitting the measurement configurations to the terminal device comprises:

   configuring, for the terminal device, a first measurement configuration with respect to each of the at least two Numerologies in a separate manner, and transmitting the first measurement configurations to the terminal device; or
   configuring, for the terminal device, a second measurement configuration with respect to the at least two Numerologies at one time, and transmitting the second measurement configuration to the terminal device.

6. The measurement configuration method according to claim 5, wherein the first measurement configuration comprises at least one of:

   a first Numerology information, a central frequency information of each cell in a to-be-measured cell list with respect to a first Numerology, and information of an allowed measurement bandwidth of each cell with respect to the first Numerology,
   wherein the to-be-measured cell list comprises a serving cell and a neighboring cell of the serving cell.

7. The measurement configuration method according to claim 5, wherein the second measurement configuration comprises at least one of:

at least one second Numerology information, a central frequency information of each cell in a to-be-measured cell list with respect to different second Numerologies, and information of an allowed measurement bandwidth of each cell with respect to a corresponding second Numerology, wherein the to-be-measured cell list comprises a serving cell and a neighboring cell of the serving cell.

8. The measurement configuration method according to claim 1, wherein the receiving the measurement report information reported by the terminal device in accordance with the measurement configuration comprises:

receiving measurement report information reported in a separate manner by the terminal device in accordance with the measurement configurations with respect to the different Numerologies, wherein the measurement report information comprises RRM measurement results with respect to different Numerologies respectively; or
receiving the measurement report information reported at one time by the terminal device in accordance with the measurement configurations with respect to different Numerologies, wherein the measurement report information comprises the RRM measurement result with respect to each of the different Numerologies, or an average value of all of the RRM measurement results with respect to the different Numerologies.

9. The measurement configuration method according to claim 1, wherein the receiving the measurement report information reported by the terminal device in accordance with the measurement configuration comprises:
receiving the measurement report information reported by the terminal device in accordance with a trigger event in the measurement configuration, wherein the trigger event comprises at least one of:

a first trigger event where channel quality measured with respect to each of the Numerologies supported by a serving cell is greater than a first threshold;
a second trigger event where the channel quality measured with respect to at least one of the Numerologies supported by the serving cell is greater than a second threshold;
a third trigger event where the channel quality measured with respect to each of the Numerologies supported by the serving cell is less than a third threshold;
a fourth trigger event where the channel quality measured with respect to at least one of the Numerologies supported by the serving cell is less than a fourth threshold;
a fifth trigger event where the channel quality measured with respect to each of the Numerologies supported by a neighboring cell is better than the channel quality measured with respect to each of the Numerologies supported by a Primary Cell (PCell) or a Primary/Secondary Cell (PSCell);
a sixth trigger event where the channel quality measured with respect to at least one of the Numerologies supported by the neighboring cell is better than the channel quality with respect to a corresponding Numerology supported by the PCell or the PSCell;
a seventh trigger event where the channel quality measured with respect to each of the Numerologies supported by the neighboring cell is greater than a fifth threshold;
an eighth trigger event where the channel quality measured with respect to at least one of the Numerologies supported by the neighboring cell is greater than a sixth threshold;
a ninth trigger event where the channel quality measured with respect to each of the Numerologies supported by the PCell or the PSCell is less than a seventh threshold and the channel quality measured with respect to each of the Numerologies supported by the neighboring cell is greater than an eighth threshold;
a tenth trigger event where the channel quality measured with respect to at least one of the Numerologies supported by the PCell or the PSCell is lower than a ninth threshold and the channel quality measured with respect to the corresponding Numerology supported by the neighboring cell is greater than a tenth threshold;
an eleventh trigger event where the channel quality measured with respect to each of the Numerologies supported by the neighboring cell is better than the channel quality measured with respect to each of the Numerologies supported by a Secondary Cell (SCell); and
a twelfth trigger event where the channel quality measured with respect to at least one of the Numerologies supported by the neighboring cell is better than the channel quality measured with respect to the corresponding Numerology supported by the SCell.

10. The measurement configuration method according to claim 1, wherein before transmitting the measurement configurations with respect to different Numerologies to the terminal device, the measurement configuration method further comprises:
configuring, for the terminal device, a dedicated Reference Signal (RS) for the RRM measurement with respect to the different Numerologies.

11. A measurement configuration method used in a terminal device, wherein the measurement configuration method comprises:

receiving measurement configurations with respect to different Numerologies transmitted from a network device, wherein the measurement configuration comprises Numerology information, and the Numerology information comprises at least one of a frequency-domain resource bandwidth, a subcarrier spacing and a cyclic prefix of a Numerology configuration;
performing RRM measurement in a to-be-measured cell with respect to each of the different Numerologies in accordance with the Numerology information in the measurement configuration, to acquire a RRM measurement result; and
transmitting measurement report information carrying the RRM measurement result to the network device.

12. The measurement configuration method according to claim 11, wherein the transmitting the measurement report information carrying the RRM measurement result to the network device comprises:

transmitting a plurality of measurement report information carrying the respective RRM measurement results with respect to different Numerologies to the network device, wherein each of the RRM measurement results corresponds to a respective one of the different Numerologies; or
transmitting one measurement report information carrying the RRM measurement results with respect to the different Numerologies to the network device, wherein the measurement report information comprises the RRM measurement result corresponding to each of the different Numerologies, or an average value of all of the RRM measurement results with respect to the different Numerologies.

13. A network device, comprising:

a first transmission module configured to transmit measurement configurations with respect to different Numerologies to a terminal device, wherein the measurement configuration comprises Numerology information, and the Numerology information comprises at least one of a frequency-domain resource bandwidth, a subcarrier spacing and a cyclic prefix of a Numerology configuration;
a first reception module configured to receive measurement report information reported by the terminal device in accordance with the measurement configuration, wherein the measurement report information comprises a RRM measurement result corresponding to the Numerology.

14. The network device according to claim 13, further comprising:
an acquisition module configured to acquire Numerology information of a neighboring cell and an uplink/downlink configuration of the neighboring cell, wherein the uplink/downlink configuration is used to indicate position information of an uplink/downlink channel resource of the neighboring cell.

15. The network device according to claim 13, wherein the first transmission module comprises:

a first transmission unit configured to configure, for the terminal device, the measurement configurations with respect to one of the Numerologies supported by the terminal device, and transmit the measurement configuration to the terminal device; or
a second transmission unit configured to configure, for the terminal device, the measurement configurations with respect to at least two of the Numerologies supported by the terminal device, and transmit the measurement configurations to the terminal device.

16. The network device according to claim 15, wherein the measurement configuration comprises at least one of:

Numerology information, a central frequency information of each cell in a to-be-measured cell list with respect to the different Numerologies, and information of an allowed measurement bandwidth of each cell with respect to the different Numerologies,
wherein the to-be-measured cell list comprises a serving cell and a neighboring cell of the serving cell.

17. The network device according to claim 15, wherein the second transmission unit comprises:

a first transmission sub-unit configured to configure, for the terminal device, a first measurement configuration with respect to each of the at least two Numerologies in a separate manner, and transmit the first measurement configurations to the terminal device; or
a second transmission sub-unit configured to configure, for the terminal device, a second measurement configuration with respect to the at least two Numerologies at one time, and transmit the second measurement configuration to the terminal device.

18. The network device according to claim 17, wherein the first measurement configuration comprises at least one of:

a first Numerology information, a central frequency information of each cell in a to-be-measured cell list with respect to a first Numerology, and information of an allowed measurement bandwidth of each cell with respect to the first Numerology,
wherein the to-be-measured cell list comprises a serving cell and a neighboring cell of the serving cell.

19. The network device according to claim 17, wherein the second measurement configuration comprises at least one of:

at least one second Numerology information, a central frequency information of each cell in a to-be-measured cell list with respect to different second Numerologies, and information of an allowed measurement bandwidth of each cell with respect to a corresponding second Numerology,
wherein the to-be-measured cell list comprises a serving cell and a neighboring cell of the serving cell.

20. The network device according to claim 13, wherein the first reception module comprises:

a first reception unit configured to receive measurement report information reported in a separate manner by the terminal device in accordance with the measurement configurations with respect to the different Numerologies, wherein the measurement report information comprises RRM measurement results with respect to different Numerologies respectively; or
a second reception unit configured to receive the measurement report information reported at one time by the terminal device in accordance with the measurement configurations with respect to different Numerologies, wherein the measurement report information comprises an average value of all of the RRM measurement results with respect to the different Numerologies.

21. The network device according to claim 13, wherein the first reception module further comprises:
a third reception unit configured to receive the measurement report information reported by the terminal device in accordance with a trigger event in the measurement configuration, wherein the trigger event comprises at least one of:

a first trigger event where channel quality measured with respect to each of the Numerologies supported by a serving cell is greater than a first threshold;
a second trigger event where the channel quality measured with respect to at least one of the Numerologies supported by the serving cell is greater than a second threshold;
a third trigger event where the channel quality measured with respect to each of the Numerologies supported by the serving cell is less than a third threshold;
a fourth trigger event where the channel quality measured with respect to at least one of the Numerologies supported by the serving cell is less than a fourth threshold;
a fifth trigger event where the channel quality measured with respect to each of the Numerologies supported by a neighboring cell is better than the channel quality measured with respect to each of the Numerologies supported by a PCell or a PSCell;
a sixth trigger event where the channel quality measured with respect to at least one of the Numerologies supported by the neighboring cell is better than the channel quality with respect to a corresponding Numerology supported by the PCell or the PSCell;
a seventh trigger event where the channel quality measured with respect to each of the Numerologies supported by the neighboring cell is greater than a fifth threshold;
an eighth trigger event where the channel quality measured with respect to at least one of the Numerologies supported by the neighboring cell is greater than a sixth threshold;
a ninth trigger event where the channel quality measured with respect to each of the Numerologies supported by the PCell or the PSCell is less than a seventh threshold and the channel quality measured with respect to each of the Numerologies supported by the neighboring cell is greater than an eighth threshold;
a tenth trigger event where the channel quality measured with respect to at least one of the Numerologies supported by the PCell or the PSCell is lower than a ninth threshold and the channel quality measured with respect to the corresponding Numerology supported by the neighboring cell is greater than a tenth threshold;
an eleventh trigger event where the channel quality measured with respect to each of the Numerologies supported by the neighboring cell is better than the channel quality measured with respect to each of the Numerologies supported by a SCell; and

a twelfth trigger event where the channel quality measured with respect to at least one of the Numerologies supported by the neighboring cell is better than the channel quality measured with respect to the corresponding Numerology supported by the SCell.

22. The network device according to claim 13, further comprising:

a configuration module configured to configure, for the terminal device, a dedicated RS for the RRM measurement with respect to the different Numerologies.

23. A terminal device, comprising:

a second reception module configured to receive measurement configurations with respect to different Numerologies transmitted from a network device, wherein the measurement configuration comprises Numerology information, and the Numerology information comprises at least one of a frequency-domain resource bandwidth, a subcarrier spacing and a cyclic prefix of a Numerology configuration;

a measurement module configured to perform RRM measurement in a to-be-measured cell with respect to each of the different Numerologies in accordance with the Numerology information in the measurement configuration, to acquire a RRM measurement result; and

a second transmission module configured to transmit measurement report information carrying the RRM measurement result to the network device.

24. The terminal device according to claim 23, wherein the second transmission module comprises:

a third transmission unit configured to transmit a plurality of measurement report information carrying the respective RRM measurement results with respect to different Numerologies to the network device, wherein each of the RRM measurement results corresponds to a respective one of the different Numerologies; or

a fourth transmission unit configured to transmit one measurement report information carrying the RRM measurement results with respect to the different Numerologies to the network device, wherein the measurement report information comprises the RRM measurement result corresponding to each of the different Numerologies, or an average value of all of the RRM measurement results with respect to the different Numerologies.

25. A network device, comprising a memory, a processor, and a computer program stored in the memory and configured to be executed by the processor, wherein the processor is configured to execute the computer program, to implement the measurement configuration method according to any one of claims 1 to 10.

26. A terminal device, comprising a memory, a processor, and a computer program stored in the memory and configured to be executed by the processor, wherein the processor is configured to execute the computer program, to implement the measurement configuration method according to claim 11 or 12.

27. A computer-readable storage medium storing therein a computer program, wherein the computer program is configured to be executed by a processor, to implement steps of the measurement configuration method according to any one of claims 1 to 10.

28. A computer-readable storage medium storing therein a computer program, wherein the computer program is configured to be executed by a processor, to implement steps of the measurement configuration method according to claim 11 or 12.

transmitting measurement configurations with respect to different Numerologies to a terminal device /101

receiving measurement report information reported by the terminal device in accordance with the measurement configuration, wherein the measurement report information includes a RRM measurement result corresponding to the Numerology /102

**Fig.1**

acquiring Numerology information of a neighboring cell and an uplink/downlink configuration of the neighboring cell /201

transmitting the measurement configurations with respect to different Numerologies to the terminal device /202

receiving measurement report information reported by the terminal device in accordance with the measurement configuration /203

**Fig.2**

□ subcarrier spacing f1      ▓ subcarrier spacing f2      ▨ subcarrier spacing f3

frequency

$f_c$

T1    T2    T3    time

**Fig.3**

subcarrier spacing f1　　subcarrier spacing f2　　subcarrier spacing f3

frequency

$f_{c1}$ —

$f_{c2}$ —

$f_{c3}$ —

$f'_{c1}$

$f'_{c2}$

T1　　　　　　T2　　　　　time

**Fig.4**

500

network device

first transmission module　510

first reception module　520

**Fig.5**

**500**

network device

**530**

acquisition module

**540**

configuration module

**510**

first transmission module

**511**

first transmission unit

second transmission unit

first transmission sub-unit **5121**

second transmission sub-unit **5122**

**512**

**520**

first reception module

**521** first reception unit

second reception unit **522**

third reception unit **523**

Fig.6

**700** processor

**720** memory

bus interface

**710** transceiver

Fig.7

receiving measurement configurations with respect to different Numerologies transmitted from a network device  /801

performing RRM measurement in a to-be-measured cell with respect to each of the different Numerologies in accordance with the Numerology information in the measurement configuration, to acquire a RRM measurement result  /802

transmitting measurement report information carrying the RRM measurement result to the network device  /803

**Fig.8**

/900

terminal device

second reception module  /910

measurement module  /920

second transmission module  /930

**Fig.9**

900

terminal device

second reception module  /910

measurement module  /920

/930

second transmission module  /932

931  third transmission unit

fourth transmission unit

**Fig.10**

## terminal device

1101

processor

1102

### memory

11021

operating system

11022

application program

1100

1104

1103

user interface

**Fig.11**

## terminal device

1280

RF circuit

1260

WiFi module

1210

power source

1250

processor

1270

audio circuit

1220

### memory

1221

first memory

1222

second memory

1200

1230

### input unit

1231

touch panel

1232

other input device

1240

### display unit

1241

display panel

**Fig.12**

# INTERNATIONAL SEARCH REPORT

| International application No. |
|---|
| PCT/CN2017/114923 |

**A. CLASSIFICATION OF SUBJECT MATTER**

H04W 24/02 (2009.01) i; H04W 24/10 (2009.01) i
According to International Patent Classification (IPC) or to both national classification and IPC

**B. FIELDS SEARCHED**

Minimum documentation searched (classification system followed by classification symbols)

H04W H04L

Documentation searched other than minimum documentation to the extent that such documents are included in the fields searched

Electronic data base consulted during the international search (name of data base and, where practicable, search terms used)

CNPAT, CNKI, WPI, EPODOC: 子载波间隔，邻小区，循环前缀，频率，频带，带宽，无线资源管理，通知，numerology, subcarrier, sub-carrier, cell, neighbor, CP, frequency, band, RRM, inform

**C. DOCUMENTS CONSIDERED TO BE RELEVANT**

| Category* | Citation of document, with indication, where appropriate, of the relevant passages | Relevant to claim No. |
|---|---|---|
| PX | VIVO, "Discussion on Numerology Multiplexing", 3GPP TSG RAN WG1 AH_NR Meeting R1-1700284, 20 January 2017 (20.01.2017), entire document | 1-28 |
| A | INTEL CORPORATION, "Considerations on NR RRM with the Flexible Numerologies", 3GPP TSG-RAN WG4 Meeting #81 R4-1609074, 18 November 2016 (18.11.2016), entire document | 1-28 |
| A | ERICSSON, "On RRM Requirements for NR", 3GPP TSG RAN WG 4 Meeting #80-bis R4-168036, 14 October 2016 (14.10.2016), entire document | 1-28 |
| A | HUAWEI et al., "Scenario & Design Criteria on Flexible Numerologies", 3GPP TSG RAN WG 1 Meeting #84bis R1-162156, 15 April 2016 (15.04.2016), entire document | 1-28 |
| A | CN 101578804 A (NOKIA CORPORATION), 11 November 2009 (11.11.2009), entire document | 1-28 |
| A | US 2016119971 A1 (QUALCOMM INCORPORATED), 28 April 2016 (28.04.2016), entire document | 1-28 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 February 2018 | 24 February 2018 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>　　　　CHEN, Gang<br><br>Telephone No. (86-10) 53961690 |

Form PCT/ISA/210 (second sheet) (July 2009)

**INTERNATIONAL SEARCH REPORT**
Information on patent family members

| International application No. |
| --- |
| PCT/CN2017/114923 |

| Patent Documents referred in the Report | Publication Date | Patent Family | Publication Date |
| --- | --- | --- | --- |
| CN 101578804 A | 11 November 2009 | WO 2008096232 A1 | 14 August 2008 |
| | | EP 2115927 A1 | 11 November 2009 |
| | | MX 2009005898 A | 26 June 2009 |
| | | US 2010027495 A1 | 04 February 2010 |
| | | KR 20090107565 A | 13 October 2009 |
| US 2016119971 A1 | 28 April 2016 | KR 20170072214 A | 26 June 2017 |
| | | EP 3210428 A1 | 30 August 2017 |
| | | CN 107079505 A | 18 August 2017 |
| | | WO 2016065167 A1 | 28 April 2016 |
| | | JP 2017531953 A | 26 October 2017 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201611236471